# EUROPÄISCHE PATENTSCHRIFT

(11) **EP 2 116 958 B1**
(45) Veröffentlichungstag und Bekanntmachung des Hinweises auf die Patenterteilung: **10.02.2016**
(21) Anmeldenummer: 09159793.0
(22) Anmeldetag: 08.05.2009
(51) Int. Cl.: G06K 9/00

(54) **Verfahren und Vorrichtung zum Ermitteln des Fahrbahnverlaufs im Bereich vor einem Fahrzeug**
Method and device for calculating the drive path in the area in front of a vehicle
Procédé et dispositif de détermination du déroulement de voie dans la zone devant un véhicule

(30) Priorität: 08.05.2008 DE 102008022856
(43) Veröffentlichungstag der Anmeldung: 11.11.2009
(73) Patentinhaber: Hella KGaA Hueck & Co., 59557 Lippstadt (DE)
(72) Erfinder: Leifheit, Jana, 16547 Birkenwerder (DE)
(74) Vertreter: Schaumburg und Partner Patentanwälte mbB

(56) Entgegenhaltungen:
- EP-A2- 1 400 916
- WO-A1-2005/013235
- WO-A1-2005/039957
- JP-A- 11 203 458
- JP-A- 2006 244 331
- UWE-PHILIPP KÄPPELER: "Erkennung und Verfolgung von Leitpfosten zur Spurprädiktion", DIPLOMARBEIT NR. 2073, 30. September 2003 (2003-09-30), Seite KOMPLETT, XP002461061, UNIVERSITAET STUTTGART
- SMUDA VONZ TRZEBIATOWSKI M ET AL: "Detecting reflection posts - lane recognition on country roads", INTELLIGENT VEHICLES SYMPOSIUM, 14. Juni 2004 (2004-06-14), - 17. Juni 2004 (2004-06-17), Seiten 304-309, XP010727486, IEEE PARMA, ITALY DOI: 10.1109/IVS.2004.1336399 ISBN: 978-0-7803-8310-4
- SHOICHI SHIMIZU ET AL: "Recognition of Road Contours Based on Extraction of 3D Positions of Delineators", INTELLIGENT TRANSPORTATION SYSTEMS CONFERENCE, 1. September 2007 (2007-09-01), Seiten 672-677, XP031151496, ITSC 2007. IEEE, PI ISBN: 978-1-4244-1395-9
- Dickmanns E D: "Dynamic Vision for Perception and Control of Motion", 2007, Springer Verlag, London, GB, XP002650936, ISBN: 978-1-84628-637-7 * Document consists of pages 112-122, 205-296, 443-448 * * Abschnitt 8.5;Tabelle 8.2 * * Abschnitt 8.6.1; * * Seite 113, letzter Absatz * * Anhang A.2.7; Seite 444 * * Abschnitt 8.4.2 *

## Beschreibung

Die Erfindung betrifft ein Verfahren und eine Vorrichtung zum Ermitteln des Fahrbahnverlaufs im Bereich vor einem Fahrzeug. Zum Erfassen der Gesamtverkehrssituation sowie zur Klassifizierung von mit Hilfe einer Bilderfassungseinheit erfassten Abbildungen von Objekten im Bereich vor dem Fahrzeug, ist es wünschenswert, den Fahrbahnverlauf in einem Bereich vor dem Fahrzeug zu ermitteln.

Entlang von Fahrbahnen sind Objekte, wie beispielsweise Leitpfosten, Sicherheitsbaken, Straßenlaternen und Markierungspunkte in regelmäßigen Abständen angeordnet.

Aus dem Dokument DE 34 17 772 T2 ist ein System zum Bestimmen des Abstandes zwischen einem fahrenden Fahrzeug und einem Objekt bekannt. Mit Hilfe einer Abbildung soll die Form des Objekts und der Straße ermittelt werden. Ferner ist aus diesem Dokument bekannt, einen Sensor zu verwenden, der die Lichteinfallsrichtung und die Farbinformationen des einfallenden Lichts auswertet. Jedoch ist es nachteilig, auf Farbinformationen beim Ermitteln des Fahrbahnverlaufs angewiesen zu sein, da dies sowohl bei der Aufnahme als auch bei der Bildverarbeitung einen erhöhten Aufwand erfordert. Ferner können Farben durch künstliche Beleuchtung, insbesondere bei Dunkelheit, verfälscht werden. Aus den Dokumenten US 6,049,171 A; US 6,906,467 B2 und EP 1 520 749 A2 sind Systeme bekannt, bei denen die Frontscheinwerfer eines Kraftfahrzeugs abhängig von den mit Hilfe eines Bildverarbeitungssystems verarbeiteten Bilddaten einer Frontkamera des Fahrzeugs gesteuert werden.

Bei vielen bekannten Fahrerassistenzsystemen wird die Form der Fahrbahn vor dem Fahrzeug auf Basis von detektierten Begrenzungsmarkierungen ermittelt.

Im Gegensatz dazu offenbart die Diplomarbeit von Käppier (2003), "Erkennung und Verfolgung von Leitpfosten zur Spurprädiktion", veröffentlicht von der Fakultät für Informatik an der Universität Stuttgart, die Detektion von Leitpfosten in Bildern vom Bereich vor dem Fahrzeug, um anhand der Leitpfostenpositionen den Fahrbahnverlauf zu schätzen. Weitere detektierte Leitpfosten werden mithilfe dieses Fahrbahnverlaufs verifiziert oder als Falschalarme aussortiert. In der Publikation von Smuda von Trzebiatowski et al und Käppler et al. (2004), "Detecting Reflection Posts - Lane Recognition on Coutry Roads", veröffentlicht im Rahmen des 2004 IEEE Intelligent Vehicles Symposium, ist dasselbe Verfahren beschrieben. Bei solchen Systemen ist eine Spurprädiktion in Szenarien möglich, wo die üblichen Fahrbahnmarkierungen schlecht sichtbar sind oder gänzlich fehlen, bspw. auf Landstrassen.

Aufgabe der Erfindung ist es, ein Verfahren und eine Vorrichtung zum Ermitteln des Fahrbahnverlaufs anzugeben, bei denen der Fahrbahnverlauf mit Hilfe von bereitgestellten Bilddaten mindestens einer Abbildung des Bereichs vor einem Fahrzeug auf einfache und höher verfügbare Art und Weise ermittelt wird.

Diese Aufgabe wird durch ein Verfahren zum Ermitteln des Fahrbahnverlaufs im Bereich vor einem Fahrzeug mit den Merkmalen des Patentanspruchs 1 sowie durch eine Vorrichtung mit den Merkmalen des unabhängigen Vorrichtungsanspruchs gelöst. Vorteilhafte Weiterbildungen der Erfindung sind in den abhängigen Patentansprüchen angegeben.

Durch ein Verfahren zum Ermitteln des Straßenverlaufs im Bereich vor einem Fahrzeug mit den Merkmalen des Patentanspruchs 1 kann der Verlauf der Fahrbahn ermittelt werden. Der ermittelte Fahrbahnverlauf kann dann relativ zum Fahrzeug in ein Umgebungsmodell zur Modellierung der Umgebung des Fahrzeugs, vorzugsweise in Beziehung zu einem Fahrzeugkoordinatensystem, eingebracht werden. Die Information über den ermittelten Straßenverlauf kann von Assistenzsystemen des Fahrzeugs weiterverarbeitet werden, insbesondere von einem Fahrspurhalteassistenzsystem oder einem Lichtassistenzsystem. Das Lichtassistenzsystem kann insbesondere den ermittelten Fahrbahnverlauf dazu nutzen, um eine vorausschauende Einstellung des Kurvenlichts durchzuführen. Weiterhin kann der ermittelte Fahrbahnverlauf dazu genutzt werden, weitere im Bild detektierte Objekte anhand oder unter Berücksichtigung ihrer relativen Lage zum erkannten Fahrbahnverlauf zu klassifizieren. Insbesondere kann durch die Zuordnung einzelner detektierter Objekte zur erkannten Struktur des Fahrbahnverlaufs auf den Objekttyp dieser Objekte geschlossen oder ein bereits bestimmter Objekttyp verifiziert oder falsifiziert werden. Beispielsweise kann eine Lichtquelle, die einer erkannten Struktur mit mehreren Straßenleuchten zugeordnet werden kann, als Straßenleuchte klassifiziert werden.

Bei einer vorteilhaften Weiterbildung der Erfindung haben die dem Fahrbahnverlauf zugeordneten Objekte ihrem Objekttyp entsprechend einen regelmäßigen Abstand zueinander. Der regelmäßige Abstand der Objekte zueinander wird beim Ermitteln des Fahrbahnverlaufs berücksichtigt. Dadurch kann auf einfache Art und Weise eine Auswahl der dem Fahrbahnverlauf bzw. der Struktur zuzuordnenden Objekte durchgeführt werden.

Weiterhin ist es vorteilhaft, den ermittelten Fahrbahnverlauf mit Hilfe von Straßenverlaufsmodellen oder mit Hilfe einer durch eine Straßenbauvorschrift vorgegebene Beschränkung zu verifizieren. Dadurch kann sichergestellt werden, dass fehlerhafte ermittelte Fahrbahnverläufe nicht weiterverarbeitet werden.

Bei einer anderen vorteilhaften Weiterbildung der Erfindung wird mindestens ein weiteres drittes Objekt ermittelt, das einer der ermittelten Fahrbahnverlauf entsprechenden Struktur zuordenbar ist. Diesem Objekt wird der Objekttyp der ersten beiden Objekte zugeordnet, mit deren Hilfe der Fahrbahnverlauf ermittelt worden ist.

Ferner kann nach dem Erkennen mindestens eines weiteren Objektes vorzugsweise in weiteren als Bildfolge aufgenommenen Bildern ein neuer bzw. ein korrigierter Fahrbahnverlauf ermittelt werden.

Der Objekttyp der Objekte kann vorteilhaft mit Hilfe eines Klassifikationsverfahrens ermittelt werden. Dieser Objekttyp kann dann mit Hilfe des ermittelten möglichen Fahrbahnverlaufs verifiziert oder falsifiziert werden.

Ferner kann es vorteilhaft sein, für die Objekte mehrere mögliche Objekttypen zu ermitteln. Die Objekte der Objekttypen mit regelmäßig angeordneten Objekten entlang des Fahrbahnverlaufs werden ausgewählt. Für die Objekttypen mit regelmäßig angeordneten Objekten wird jeweils ein Fahrbahnverlauf als Hypothese ermittelt, die durch die Verarbeitung von Bilddaten weiterer Bilder einer Bildfolge jeweils weiterverfolgt und verifiziert oder falsifiziert werden. Dabei ist es vorteilhaft, wenn für jede Hypothese die Wahrscheinlichkeit ermittelt wird, dass der Fahrbahnverlauf der Hypothese dem tatsächlichen Fahrbahnverlauf entspricht.

Das mindestens eine Bild wird insbesondere mit Hilfe einer im oder am Fahrzeug angeordneten Kamera, vorzugsweise einer Frontkamera, ermittelt. Die Kamera ist vorzugsweise ein Stereokamerasystem, mit dessen Hilfe die Entfernung zwischen dem ermittelten Objekt und dem Kraftfahrzeug bestimmt wird. Mit Hilfe der Kamera werden vorzugsweise mehrere Bilder mit Abbildungen der mindestens zwei Objekte nacheinander als Bildfolge erfasst. Weiterhin ist es vorteilhaft, eine Objektverfolgung der ermittelten Objekte über mehrere erfasste Bilder durchzuführen. Eine solche Objektverfolgung wird auch als Tracking bezeichnet. Insbesondere kann die Position eines Objekts in einem nachfolgenden Bild abhängig von der Eigenbewegung der Kamera bzw. des Fahrzeugs vorhergesagt werden und diese Position im nächsten Bild überprüft werden. Bei der Vorhersage der Position des Objekts im nächsten Bild wird insbesondere der Objekttyp des Objekts berücksichtigt. Besonders vorteilhaft ist es, den Fahrbahnverlauf ausgehend von einem Fahrzeugkoordinatensystem zu ermitteln, wobei die X-Achse des Fahrzeugkoordinatensystems parallel zur Längsachse des Fahrzeugs verläuft und der Straßenverlauf als Funktion fy (x) in Y-Richtung und fz (x) in Z-Richtung ermittelt wird. Der Straßenverlauf kann insbesondere mit Hilfe eines Polynoms dritter Ordnung beschrieben werden. Dabei kann der durch das Polynom beschriebene Fahrbahnverlauf über den im Bild sichtbaren Straßenverlauf hinausgehen. Auch kann ein sogenannter Kalman-Filter beim Ermitteln des Fahrbahnverlaufs genutzt werden. Beim Ermitteln des Polynoms können insbesondere der Fahrbahnverlauf oder zumindest ein Teil des Fahrbahnverlaufs der zurückgelegten Fahrstrecke des Fahrzeugs berücksichtigt werden.

Ferner kann die Varianz der Position der ermittelten Objekte beim Ermitteln des Fahrbahnverlaufs und/oder beim Zuordnen der Objekte zu einem bereits ermittelten Straßenverlauf berücksichtigt werden. Dadurch können auch Objekte einem Fahrbahnverlauf bzw. der Struktur des Fahrbahnverlaufs zugeordnet werden, wenn diese nicht exakt in das Raster der regelmäßigen Abstände und/oder neben dem ermittelten Fahrbahnverlauf liegen.

Ein zweiter Aspekt der Erfindung betrifft eine Anordnung zum Ermitteln des Fahrbahnverlaufs im Bereich vor einem Fahrzeug. Die Anordnung umfasst eine Bilderfassungseinheit, die Bilddaten mindestens einer Abbildung des Bereichs vor dem Fahrzeug bereitstellt und eine Verarbeitungseinheit, die die bereitgestellten Bilddaten verarbeitet, wobei die Verarbeitungseinheit mindestens zwei Objekte in mindestens einem Bild detektiert. Die Verarbeitungseinheit überprüft, ob die ermittelten Objekte demselben Objekttyp zuordenbar sind. Ferner überprüft die Verarbeitungseinheit, ob für den einen Objekttyp der beiden Objekte als Objekteigenschaft voreingestellt ist, das Objekte dieses Objekttyps in einer dem Fahrbahnverlauf entsprechenden Struktur angeordnet sind. Ferner ermittelt die Verarbeitungseinheit abhängig von den Positionen der ermittelten Objekte im Bild einen Fahrbahnverlauf. Mit Hilfe dieser erfindungsgemäßen Vorrichtung kann auf einfache Art und Weise ein Fahrbahnverlauf ermittelt werden. Diese Anordnung ist insbesondere dazu geeignet, den Fahrbahnverlauf auch ohne Farbauswertung, insbesondere beim Erfassen von Graustufenbildern, zu bestimmen. Ferner lassen sich durch diese erfindungsgemäße Vorrichtung die gleichen Vorteile erzielen, wie in Verbindung mit dem Verfahren nach Patentanspruch 1 bereits erläutert. Auch kann die Vorrichtung mit den Merkmalen des unabhängigen Vorrichtungsanspruchs auf die gleiche Weise weitergebildet werden, wie für das Verfahren nach Anspruch 1 angegeben. Insbesondere kann die Vorrichtung mit den in den abhängigen Patentansprüchen angegebenen Merkmalen bzw. entsprechenden Vorrichtungsmerkmalen weitergebildet werden.

Weitere Merkmale und Vorteile der Erfindung ergeben sich aus der folgenden Beschreibung, welche in Verbindung mit den beigefügten Figuren die Erfindung anhand eines Ausführungsbeispiels näher erläutert.

Es zeigen:
- Figur 1: den Verlauf einer Fahrbahn und seitlich der Fahrbahn angeordnete Leitelemente;
- Figur 2: die bei Dunkelheit und Scheinwerferbeleuchtung eines Fahrzeugs seitlich der Fahrbahn nach Figur 1 angeordneten sichtbaren Leitelemente;
- Figur 3: ein Diagramm, in dem die Struktur von seitlich der Fahrbahn angeordneten Elementen dargestellt ist;
- Figur 4: eine schematische räumliche Darstellung des ermittelten Fahrbahnverlaufs zum Fahrzeug;
- Figur 5: ein Ablaufdiagramm zum Ermitteln von Hypotheken für mehrere mögliche Fahrbahnverläufe und zum Zuordnen von detektierten Objekten zu den Hypothesen; und
- Figur 6: einen Ablaufplan zur Überprüfung der ermittelten Hypothesen.

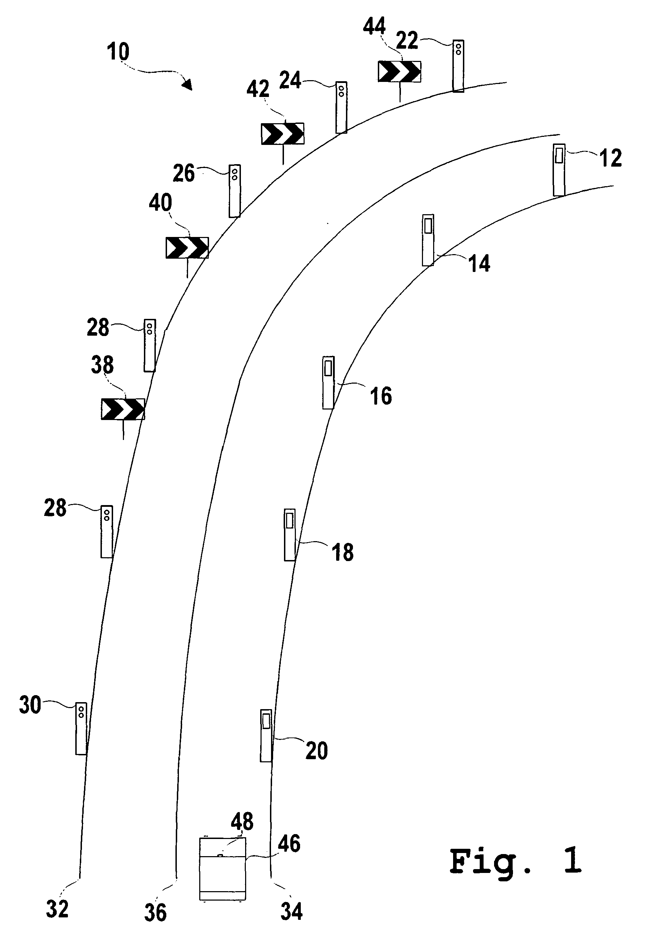

In Figur 1 ist der Verlauf einer Fahrbahn 10 mit mehreren seitlich der Fahrbahn 10 angeordneten Leitpfosten 12 bis 30 an den seitlichen Fahrbahnrändern 32, 34 angeordnet, die etwa denselben Abstand zu einer Mittellinie 36 der zweistreifigen Fahrbahn 10 haben. Ferner sind in der Rechtskurve der Fahrbahn 10 am linken Fahrbahnrand 32 Richtungstafeln 38 bis 44 angeordnet. Die Leitpfosten 12 bis 32 sowie die Richtungstafeln 38 bis 44 sind als Objektabbildungen in einem mit Hilfe einer Frontkamera 48 eines Fahrzeugs 46 aufgenommenen Bildes enthalten und können mit Hilfe eines geeigneten Objekterkennungsverfahrens beim Verarbeiten der Bilddaten des Objekts im Bild detektiert werden. Werden zumindest die Leitpfosten 16 bis 20 in einem ersten Bild detektiert, können diese mit Hilfe eines Objektklassifikationsverfahrens als Leitpfosten klassifiziert werden. Die Objektklasse Leitpfosten ist geeignet, den Verlauf der Fahrbahn 10 abhängig von den Positionen der dieser Objektklasse zugeordneten Leitpfosten 16 bis 20 zu bestimmen. Ausgehend von den im Bild ermittelten Positionen der Leitpfosten 16 bis 20 kann dann der Verlauf des Fahrbahnrandes 34 als Struktur der Leitpfosten 16 bis 20 ermittelt werden. Insbesondere kann ein Polynom dritter Ordnung ermittelt werden, um den dreidimensionalen Verlauf der Struktur zu beschreiben. Abhängig von der veränderten Position des Fahrzeugs 46 durch die Fahrbewegung des Fahrzeugs 46 werden die Positionen der detektierten Objekte 16 bis 20 in einem nachfolgenden Bild vorausgesagt und mit den Positionen der im nachfolgenden Bild detektierten Objekte verglichen. Dadurch können insbesondere nicht korrekt klassifizierte Objekte erkannt und bei der weiteren Verarbeitung der ermittelten Struktur des Fahrbahnrades 36 dieser nicht weiter zugeordnet werden. Ferner können in einem nachfolgenden Bild zusätzlich die Leitpfosten 12 und 14 als Objekte detektiert werden, wobei deren Position in einem Koordinatensystem, vorzugsweise dem Fahrzeugkoordinatensystem des Fahrzeugs 46, ermittelt wird. Unter Berücksichtigung der Varianzen der Positionen der Objekte 12 bis 20 sowie erforderlichenfalls unter Berücksichtigung der Varianz der ermittelten Struktur kann überprüft werden, ob die neu detektierten Leitpfosten 12, 14 der ermittelten Struktur 34 zugeordnet werden können. Ist das der Fall, so kann eine neue korrigierte Struktur 34 ermittelt werden. In gleicher Weise kann bei der Detektion einzelner dem linken Fahrbahnrand 32 zuordenbaren Leitpfosten 22 bis 30 eine Struktur dieser Leitpfosten 22 bis 30 ermittelt werden, die dem Verlauf des linken Fahrbahnrandes 32 entspricht. Die Leitpfosten an Fahrbahnrändern 32, 34 haben üblicherweise einen Abstand von etwa 50 Meter zueinander, sodass dieses Abstandsraster als weiteres Kriterium dienen kann, einzelne detektierte Objekte der Struktur zuzuordnen und so als Leitpfosten zu klassifizieren oder als Leitpfosten klassifizierte Objekte der konkreten Struktur zuzuordnen. Zuordnungsprobleme von Objekten zu einer Struktur können insbesondere dann auftreten, wenn bei den detektierten Objekten nicht zwischen den den einzelnen Strukturen zuzuordnenden Objekten klar unterschieden werden kann. Insbesondere tritt ein solcher Fall auf, wenn nicht eindeutig zwischen Leitpfosten 12 bis 20, die am rechten Fahrbahnrand angeordnet sind, und Leitpfosten 22 bis 30, die am linken Straßenrand angeordnet sind, unterschieden werden kann.

Der Verlauf des linken Fahrbahnrands 32 kann zusätzlich oder alternativ im Bereich der in der Rechtskurve der Fahrbahn 10 am linken Fahrbahnrand angeordneten Richtungstafeln 38 bis 44 ermittelt werden. Alternativ oder zusätzlich können auch Straßenleuchten (nicht dargestellt) im Bild detektiert und die Struktur des Verlaufs der Straßenleuchten ermittelt werden, durch den auf den Verlauf der Fahrbahn 10 geschlossen werden kann. Diese Straßenleuchten können auch zur Straßenbeleuchtung eines neben der Fahrbahn 10 angeordneten Fuß- oder Radwegs gehören, wobei dann zusätzlich die Entfernung zwischen dem Straßenrand 32 bzw. 34 und dem neben der Fahrbahn 10 angeordneten beleuchteten Weg beim Ermitteln des Straßenverlaufs zu berücksichtigen ist.

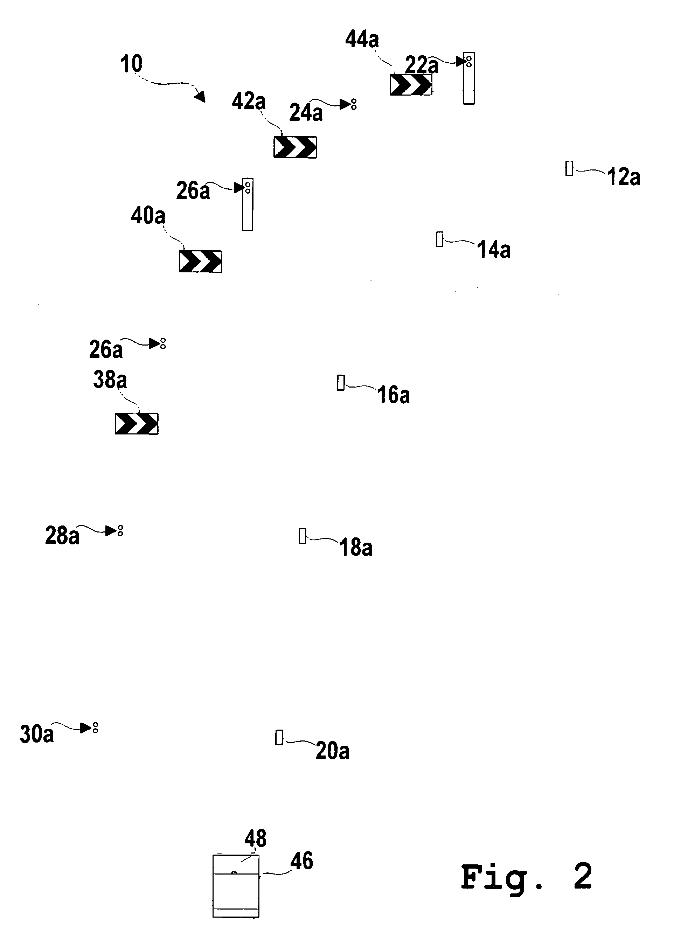

In Figur 2 ist die Fahrbahn 10 nach Figur 1 in einem bei Dunkelheit mit künstlicher Beleuchtung aufgenommenen Bild dargestellt, wobei das Fahrzeug 46 die lichtreflektierenden Elemente der Leitpfosten 12 bis 30 und der Richtungstafeln 38 bis 44 mit Fernlicht anstrahlt und das von diesen Elementen 12 bis 30; 38 bis 44 reflektierte Licht und nicht die gesamten Leitpfosten 12 bis 30 und die Richtungstafeln 38 bis 44 als Abbildungen im Bild enthalten sind. Die lichtreflektierenden Elemente der Leitpfosten 12 bis 30 und der Richtungstafeln 38 bis 44 sind in Figur 2 mit derselben Bezugszeichenziffer der entsprechenden Leitpfosten bzw. Richtungstafeln und dem Kleinbuchstaben a bezeichnet.

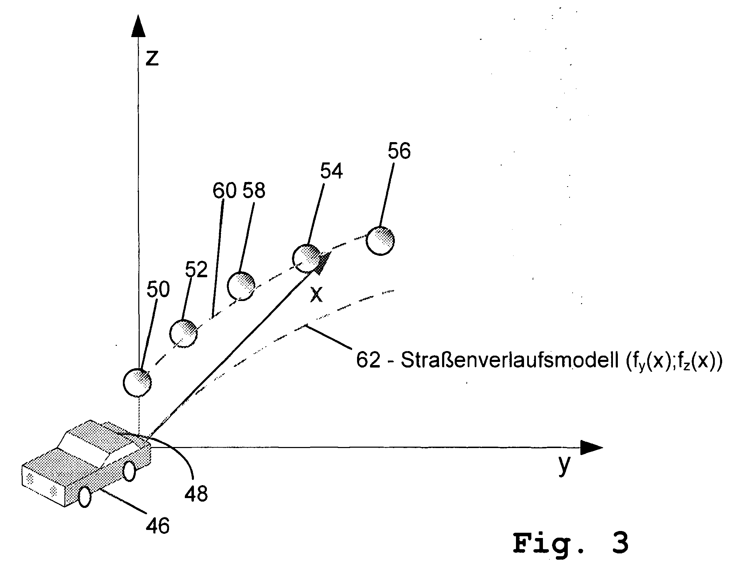

In Figur 3 ist ein Diagramm dargestellt, dass das Fahrzeugkoordinatensystem des Fahrzeugs 46 zeigt. Der Nullpunkt des Fahrzeugkoordinatensystems liegt vorzugsweise auf der Fahrbahnoberfläche in der Mitte der Vorderachse des Fahrzeugs 46. In mindestens einem von der Frontkamera 48 des Fahrzeugs 46 aufgenommen Bild sind die Objekte 50 bis 56 detektiert und als Lichtquellen von Straßenleuchten klassifiziert worden. In einem nachfolgend aufgenommenen Bild ist zusätzlich eine weitere Lichtquelle als Objekt 58 detektiert worden. Aufgrund der Nähe der Lichtquelle zum ermittelten Verlauf der Struktur der Lichtquellen 50 bis 56 ist auch die Lichtquelle 58 der Struktur zuzuordnen, wobei bei der Zuordnung der Lichtquelle 58 zur Struktur 60 zumindest die Varianz der ermittelten Position der Lichtquelle 58 berücksichtigt wird. Vorzugsweise kann zusätzlich oder alternativ auch die Varianz der ermittelten Struktur 60 bei der Zuordnung der detektierten Lichtquelle 58 zur Struktur 60 berücksichtigt werden. Aufgrund des Abstandes der Lichtquellen 50 bis 58 der Straßenlampen zur Fahrbahnoberfläche wird ausgehend von der ermittelten Struktur 60 die Position des im vorliegenden Ausführungsbeispiel linken Straßenrandes als Struktur 62 ermittelt und als Fahrbahnverlauf ausgegeben.

Sowohl die Struktur 60 als auch die Struktur 62 wird vorzugsweise als dreidimensionaler Verlauf der Fahrbahn bzw. des Fahrbahnrandes zur Weiterverarbeitung zur Verfügung gestellt. Dieser dreidimensionale Verlauf wird vorzugsweise durch ein Polynom dritter Ordnung beschrieben.

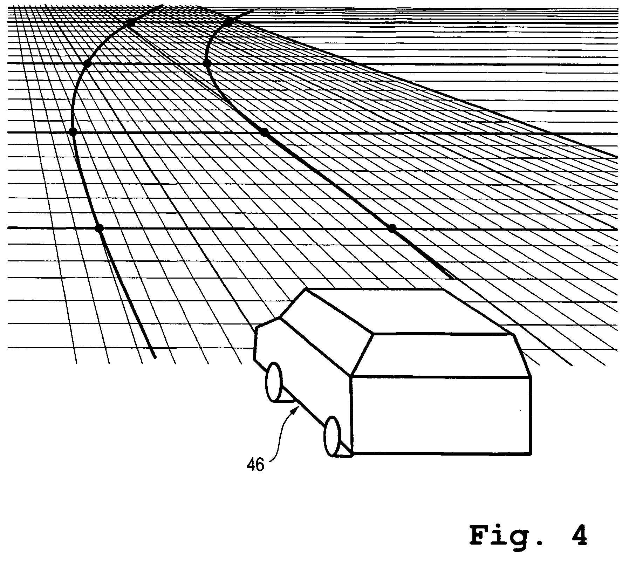

In Figur 4 ist der Verlauf des linken und rechten Fahrbahnrandes 32, 34 im Fahrzeugkoordinatensystem gezeigt. Zum Ermitteln des Verlaufs der Fahrbahn 10 können jedoch auch andere auf der Fahrbahn 10, am Fahrbahnrand oder neben der Fahrbahn 10 angeordneten Objekte, wie z. B. Warnbaken an Bahnübergängen oder an Ausfahrten von Schnellstraßen und Autobahnen sowie andere regelmäßig und unregelmäßig angeordnete Elemente genutzt werden. Alternativ zum Fahrzeugkoordinatensystem kann der ermittelte Verlauf der Fahrbahn 10 auch in ein fahrzeugunabhängiges Koordinatensystem, wie einem Weltkoordinatensystem, bezogen ermittelt und/oder weiterverarbeitet werden. Besonders vorteilhaft ist es, den ermittelten Verlauf der Fahrbahn 10 mit Hilfe von Straßenbauvorschriften und/oder mit den von einem Navigationssystem bereitgestellten Daten zu verifizieren. Zum Erfassen des mindestens einen Bildes eignen sich sowohl monokulare Kameras als auch Stereokamerasysteme, wobei die Monokamerasysteme kostengünstiger sind, jedoch bei mit Hilfe der von Monokameras aufgenommenen Bildern keine oder nur eine eingeschränkte Entfernungsbestimmung zu Objekten vorzugsweise mit Hilfe eines Triangulationsverfahrens, durchgeführt werden kann und ein relativ teures Stereokamerasystem die Entfernung zwischen dem Fahrzeug 46 und dem Objekt exakt bestimmen kann. Bei der Monokamera können die Entfernungen zwischen den Objekten auch mit Hilfe von Straßenbauvorschriften ermittelt werden. So ist es beispielsweise üblich, die Leitpfosten in Abständen von 50 Metern anzuordnen, sodass bei mehreren detektierten Leitpfosten 12 bis 30 Abstände von 50 Metern oder einem vielfachen von 50 Metern zwischen den Leitpfosten 12 bis 30 angenommen werden kann.

Vorteilhaft ist es, mindestens eine Hypothese für einen wahrscheinlichen Straßenverlauf aufzustellen und diese Hypothese durch in weiteren Bildern detektierten Objekten zu verifizieren. Dazu können insbesondere bekannte Filter genutzt werden, wie z. B. ein Kalman-Filter. Die erkannte Struktur des Verlaufs der Fahrbahn 10 kann einem Fahrspurassistenzsystem zur Weiterverarbeitung bereitgestellt oder einem Lichtassistenzsystem bereitgestellt werden. Insbesondere kann mit der Information über den weiteren Verlauf der Fahrbahn 10 für eine vorausschauende Einstellung des Kurvenlichts der Frontscheinwerfer genutzt werden. Weiterhin kann ausgehend von dem ermittelten Fahrbahnverlauf eine Klassifizierung weiterer Objekte, insbesondere von Verkehrszeichen oder von für das Fahrzeug 46 uninteressantere weit von der Fahrbahn 10 entfernte Objekte durchgeführt werden.

Durch die Zuordnungsmöglichkeit einzelner Objekte zu der ermittelten Struktur des Straßenverlaufs kann auch auf den Objekttyp dieser Objekte geschlossen werden. Ist z. B. eine Lichtquelle 58 einer erkannten Struktur 60 mit mehreren Straßenleuchten 52 bis 56 zugeordnet worden, so kann diese Lichtquelle 58 als Straßenleuchte klassifiziert werden.

Beim Abarbeiten eines Algorithmus zur Erkennung gerichteter Strukturen durch ein Bildverarbeitungssystem eines Stereokamerasystems werden die in den aufgenommenen Bildern detektierten Objekte genutzt, die potentiell einer bereits ermittelten Struktur oder einer neuen Struktur zuordenbar sind. Durch die Positionsermittlung des Stereokamerasystems sind für jedes der detektierten Objekte die Position im dreidimensionalen Fahrzeugkoordinatensystem sowie die Varianz dieser Position bekannt. Die Struktur wird vorzugsweise mit Hilfe eines Polynoms dritter Ordnung in horizontaler Y-Richtung und vertikaler Z-Richtung beschrieben. Durch dem Bildverarbeitungssystem bekannte Zusammenhänge, wie z. B. mögliche durch Straßenbauvorschriften vorgegebene zulässige Verläufe von Fahrbahnen, oder anhand der Lage bereits klassifizierter Objekte wird zunächst eine Hypothese für die Lage der Struktur relativ zum Fahrzeug 46 angenommen. Die detektierten Objekte werden aufgrund ihres Abstandes zur ermittelten oder angenommenen Struktur und der Varianz der ermittelten Position einer Struktur zugeordnet oder nicht. Mit Hilfe eines Kalman-Filters werden dann die Modellparameter eines Straßenverlaufsmodells geschätzt und dieses Modell für das nächste Bildverarbeitungssystem verarbeitete Bild präzisiert. Vorzugsweise ist das nächste verarbeitete Bild auch das nächste mit Hilfe der Frontkamera aufgenommene Bild bzw. Bildpaar des Stereokamerasystems. Ferner kann bei Objekten, bei denen aufgrund ihres Objekttyps von einer regelmäßigen Anordnung der Objekte im Raum ausgegangen werden kann, der Abstand der Objekte zueinander auch mit Hilfe eines weiteren Filters geschätzt werden. Die Abstandsschätzung des Abstandes der Objekte untereinander erleichtert die spätere Zuordnung weiterer detektierter Objekte zu der ermittelten Struktur.

Wie bereits erwähnt, kann auch mit Hilfe eines Monokamerasystems die 3D-Position von Objekten im Fahrzeugkoordinatensystem nur mit einer relativ geringen Genauigkeit geschätzt werden, jedoch kann auch bei Monokamerasystemen mit Hilfe der beschriebenen Vorgehensweise die ungefähre Lage der Struktur von detektierten Objekten ermittelt werden. Wie bereits erwähnt, kann ausgehend von der eigenen Position des Fahrzeugs 46 der Fahrbahnverlauf bzw. Straßenverlauf durch die Erkennung von in regelmäßigen Abständen angeordneten Objekten ermittelt werden. Nach der Initialisierung einer Hypothese über den Verlauf der Struktur des Fahrbahnverlaufs können detektierte Objekte der Struktur der Hypothese zugeordnet werden, wenn sie aufgrund ihrer Bildposition keinen oder nur einen geringen voreingestellten Abstand zur Struktur haben. Somit können diese Objekte dem in ein aufgenommenes Bild projizierten Verlauf der Struktur der Hypothese zugeordnet werden. Anschließend können die 3D-Positionen der Objekte aufgrund von Zwangsbedingungen ermittelt werden, die sich aus ihrer Zuordnung zur Struktur ergeben. Eine weitere Verarbeitung der Positionen und Verifizierung des ermittelten Verlaufs der Fahrbahn 10 kann wie bereits zuvor im Zusammenhang mit dem Stereokamerasystem beschrieben, durchgeführt werden.

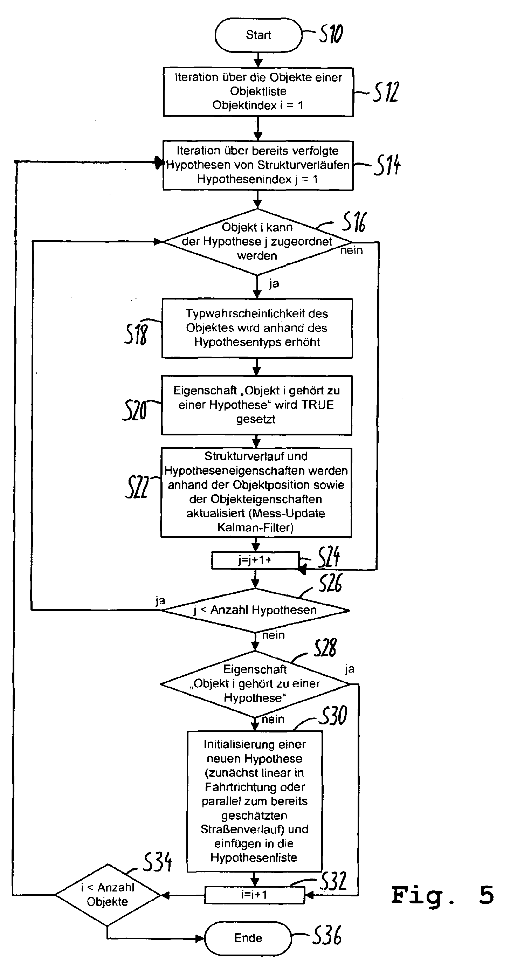

In Figur 5 ist ein Ablaufplan dargestellt, der die Zuordnung einzelner Objekte zu einer von mehreren möglichen Hypothesen und das erzeugen neuer Hypothesen zeigt. Der Ablauf wird im Schritt S10 gestartet. Im Schritt S12 wird der Objektindex i auf 1 gesetzt, sodass das erste in einer Objektliste mit den in einem Bild detektierten Objekten als erstes zu verarbeitendes Objekt ausgewählt wird. Nachfolgend wird im Schritt S 14 der Hypothesenindex j auf den Wert 1 gesetzt, sodass eine erste von mehreren parallel verfolgten Hypothesen zur weiteren Verarbeitung ausgewählt ist. Anschließend wird im Schritt S16 überprüft, ob das ausgewählte Objekt i der ausgewählten Hypothese j zugeordnet werden kann. Ist dies der Fall, so wird anschließend in Schritt S18 die Wahrscheinlichkeit des Objekt-typs des ausgewählten Objekts i abhängig vom Hypothesentyp j erhöht, da der Objekttyp des Objekts tatsächlich mit dem Objekttyp der Hypothese übereinstimmt. Nachfolgend wird im Schritt S 20 dem Objekt i eine Information zugeordnet, dass das ausgewählte Objekt i zur ausgewählten Hypothese j gehört. Anschließend wird im Schritt S22 der Strukturverlauf und die Hypotheseeigenschaften der ausgewählten Hypothese anhand der Objektposition im Bild sowie der Objekteigenschaften des Objekts aktualisiert. Dazu können insbesondere ein sogenannter Kalman-Filter verwendet werden. Anschließend wird im Schritt S24 der Index j um 1 erhöht. Wird im Schritt S16 jedoch festgestellt, dass das Objekt i der ausgewählten Hypothese j nicht zugeordnet werden kann, so wird anschließend im Schritt S24 ebenfalls der Indexwert j um 1 erhöht. Nachfolgend wird im Schritt S26 überprüft, ob j aktuell kleiner oder gleich der Anzahl der zu prüfenden Hypothesen ist. Ist das der Fall, so werden die Schritte S16 bis S24 so lange wiederholt, bis im Schritt S26 festgestellt wird, dass j nicht kleiner gleich der Anzahl der zu prüfenden Hypothesen ist, d. h., dass j größer als die Anzahl der zu prüfenden Hypothesen ist. Anschließend wird im Schritt S28 überprüft, ob das ausgewählte Objekt i eine der verfolgten Hypothesen zugeordnet werden konnte. Ist das nicht der Fall, so wird anschließend im Schritt S30 eine neue Hypothese aufgestellt, deren Struktur zumindest parallel zur Fahrtrichtung oder parallel zu einem bereits ermittelten Straßenverlauf verläuft. Diese neue Hypothese wird der Hypothesenliste mit mehreren parallel verfolgten Hypothesen hinzugefügt. Dadurch erhöht sich die Gesamtzahl der im Schritt S26 als Anzahl der Hypothesen zu berücksichtigende Anzahl der Hypothesen. Anschließend wird der Objektindex i um den Wert 1 erhöht. Wird im Schritt S28 jedoch festgestellt, dass das ausgewählte Objekt i einer bereits verfolgten in der Hypothesenliste enthaltenen Hypothese zuzuordnen ist, wird direkt vom Schritt S28 zum Schritt S32 verzweigt. Anschließend wird im Schritt S34 überprüft, ob der Objektindex i kleiner oder gleich der Anzahl der in der Objektliste enthaltenen Objekte ist. Ist das der Fall, so wird der Ablauf im Schritt S14 fortgesetzt. Ist das nicht der Fall, so ist der Ablauf im Schritt S36 beendet.

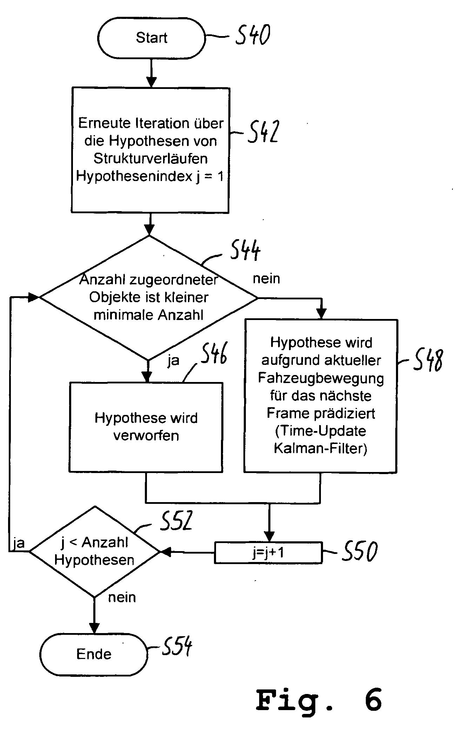

In Figur 6 ist ein Ablaufdiagramm zur Auswahl von weiterzuverfolgenden Hypothesen gezeigt. Der Ablauf wird im Schritt S40 gestartet. Anschließend wird im Schritt S42 erneut der Wert des Hypothesenindex auf j gleich 1, d. h. auf die erste zu überprüfende Hypothese einer Hypothesenliste mit parallel verfolgten Hypothesen gesetzt. Anschließend wird im Schritt S44 überprüft, ob die Anzahl der der ausgewählten Hypothese zuordenbaren Objekte i kleiner als die minimal voreingestellte erforderliche Anzahl ist. Ist das der Fall, so wird anschließend im Schritt S46 die Hypothese verworfen und im Schritt S48 der Zählwert um 1 erhöht. Wird im Schritt S44 jedoch festgestellt, dass die Anzahl der der Hypothese zugeordneten Objekte die minimale Anzahl erreicht oder überschritten hat, so wird im Schritt S48 der der Hypothese entsprechende Strukturverlauf für den Verlauf der Fahrbahn bzw. der Struktur der Objekte aufgrund der aktuellen Fahrzeugbewegung für das nächste zu verarbeitende Bild berechnet und somit vorhergesagt. Dies kann insbesondere mit Hilfe eines sogenannten Time Updates durch einen Kaman-Filter erfolgen. Anschließend wird im Schritt S48 der Zählwert des Hypothesenindex um 1 erhöht. Anschließend wird im Schritt S52 überprüft, ob j kleiner oder gleich der Anzahl der in der Hypothesenliste voreingestellten Hypothesen ist. Ist das der Fall, so werden die Schritte S44 bis S52 wiederholt, bis der Zählwert j im Schritt S52 die Anzahl der voreingestellten Hypothesen überschreitet und der Ablauf im Schritt S54 beendet ist.

## Patentansprüche

1. Verfahren zum Ermitteln des Fahrbahnverlaufs im Bereich vor einem Fahrzeug;
bei dem ausgehend von bereitgestellten Bilddaten mindestens eines Bildes einer Abbildung des Bereichs vor dem Fahrzeug (46) mindestens zwei Objekte (12 bis 30, 38, 44) in dem Bild ermittelt werden, **dadurch gekennzeichnet, dass**
überprüft wird, ob die ermittelten Objekte (12 bis 30, 38, 44) demselben Objekttyp zuordenbar sind;
überprüft wird, ob für den einen Objekttyp der beiden Objekte (12 bis 30, 38, 44) als Objekteigenschaft voreingestellt ist, dass Objekte (12 bis 30, 38, 44) dieses Objekttyps in einer dem Fahrbahnverlauf (10, 32, 34) entsprechenden Struktur angeordnet sind; und falls ja, mindestens ein Fahrbahnverlauf (10, 32, 34) abhängig von den Positionen der ermittelten Objekte (12 bis 30, 38, 44) im Bild ermittelt wird,
mindestens ein weiteres drittes Objekt (12 bis 30, 38, 44) ermittelt wird, das der dem ermittelten Fahrbahnverlauf (10, 32, 34) folgenden Struktur zuordenbar ist, und
diesem Objekt (12 bis 30, 38, 44) der Objekttyp der ersten beiden Objekte (12 bis 30, 38, 44) zugeordnet wird, mit deren Hilfe der Fahrbahnverlauf (10, 32, 34) ermittelt worden ist.

2. Verfahren nach Anspruch 1, **dadurch gekennzeichnet, dass** die Objekte (12 bis 30, 38, 44) entsprechend dem Objekttyp einen regelmäßigen Abstand zueinander haben, und dass der regelmäßige Abstand der Objekte (12 bis 30, 38, 44) zueinander bei dem Ermitteln des Fahrbahnverlaufs (10, 32, 34) berücksichtigt wird.

3. Verfahren nach einem der vorhergehenden Ansprüche, **dadurch gekennzeichnet, dass** der ermittelte Fahrbahnverlauf (10, 32, 34) mit Hilfe von Fahrbahnverlaufsmodellen oder mit Hilfe mindestens einer durch eine Straßenbauvorschrift vorgegebenen Beschränkung verifiziert wird.

4. Verfahren nach einem der vorhergehenden Ansprüche, **dadurch gekennzeichnet, dass** ein neuer Fahrbahnverlauf (10, 32, 34) mit Hilfe der ermittelten Positionen der Objekte (12 bis 30, 38, 44) im Bild ermittelt wird.

5. Verfahren nach einem der vorhergehenden Ansprüche, **dadurch gekennzeichnet, dass** der Objekttyp der Objekte (12 bis 30, 38, 44) mit Hilfe eines Klassifikationsverfahrens ermittelt wird und dass dieser Objekttyp mit Hilfe des ermittelten möglichen Fahrbahnverlaufs (10, 32, 34) verifiziert oder falsifiziert wird.

6. Verfahren nach einem der vorhergehenden Ansprüche, **dadurch gekennzeichnet, dass** für die Objekte (12 bis 30, 38, 44) mehre mögliche Objekttypen ermittelt werden, dass die Objekttypen mit regelmäßig angeordneten Objekten (12 bis 30, 38, 44) entlang des Fahrbahnverlaufs (10, 32, 34) ausgewählt werden und dass für die Objekttypen mit regelmäßig angeordneten Objekten (12 bis 30, 38, 44) jeweils ein Fahrbahnverlauf als Hypothese ermittelt wird, die durch die Verarbeitung von Bilddaten weiterer Bilder einer Bildfolge jeweils weiterverfolgt und verifiziert oder falsifiziert wird.

7. Verfahren nach einem der vorhergehenden Ansprüche, **dadurch gekennzeichnet, dass** das Bild mit Hilfe mindestens einer im oder am Fahrzeug (46) angeordneten Kamera (48) ermittelt wird.

8. Verfahren nach Anspruch 7, **dadurch gekennzeichnet, dass** als Kamera (48) ein Stereokamerasystem eingesetzt wird, wobei Stereokamerasystem die Entfernung zwischen dem ermittelten Objekt und dem Fahrzeug (46) ermittelt.

9. Verfahren nach Anspruch 7 oder 8, **dadurch gekennzeichnet, dass** mit Hilfe der Kamera (48) mehrere Bilder mit Abbildungen der mindestens zwei Objekte (12 bis 30, 38, 44) nacheinander als Bildfolge erfasst werden.

10. Verfahren nach einem der vorhergehenden Ansprüche 5 bis 9, **dadurch gekennzeichnet, dass** eine Objektverfolgung über mehrere erfasste Bilder durchgeführt wird.

11. Verfahren nach Anspruch 10, **dadurch gekennzeichnet, dass** als Fahrbahnverlauf (10, 32, 34) ausgehend von einem Fahrzeugkoordinatensystem ermittelt wird, wobei die X-Achse des Fahrzeugkoordinatensystems parallel zur Längsachse des Fahrzeugs (46) verläuft und der Fahrbahnverlauf (10, 32, 34) als Funktion in Y- und in Z-Richtung ermittelt wird, vorzugsweise als Polynom dritter Ordnung.

12. Verfahren nach einem der vorhergehenden Ansprüche, **dadurch gekennzeichnet, dass** die Varianz der Positionen der ermittelten Objekte (12 bis 30, 38, 44) beim Ermitteln des Fahrbahnverlaufs (10, 32, 34) berücksichtigt wird.

13. Verfahren nach einem der vorhergehenden Ansprüche, **dadurch gekennzeichnet, dass** der ermittelte Fahrbahnverlauf (10, 32, 34) durch ein Fahrspurhaltassistenzsystem oder ein Lichtassistenzsystem weiterverarbeitet wird.

14. Anordnung zum Ermitteln des Fahrbahnverlaufs im Bereich vor einem Fahrzeug
mit einer Bilderfassungseinheit, die Bilddaten mindestens einer Abbildung des Bereichs vor dem Fahrzeug bereitstellt; und
mit einer Verarbeitungseinheit, die die bereitgestellten Bilddaten verarbeitet,
wobei die Verarbeitungseinheit mindestens zwei Objekte (12 bis 30, 38, 44) in mindestens einem Bild detektiert, **dadurch gekennzeichnet**
**dass** die Verarbeitungseinheit überprüft, ob die ermittelten Objekte (12 bis 30, 38, 44) demselben Objekttyp zuordenbar sind,
und **dass** die Verarbeitungseinheit überprüft, ob für den einen Objekttyp der beiden Objekte (12 bis 30, 38, 44) als Objekteigenschaft voreingestellt ist, dass Objekte (12 bis 30, 38, 44) dieses Objekttyps in einer dem Fahrbahnverlauf (10, 32, 34) entsprechenden Struktur angeordnet sind, und falls ja, die Verarbeitungseinheit mindestens ein Fahrbahnverlauf (10, 32, 34) abhängig von den Positionen der ermittelten Objekte (12 bis 30, 38, 44) im Bild ermittelt, und
**dass** die Verarbeitungseinheit mindestens ein weiteres drittes Objekt (12 bis 30, 38, 44) ermittelt, das der dem ermittelten Fahrbahnverlauf (10, 32, 34) folgenden Struktur zuordenbar ist, und
**dass** die Verarbeitungseinheit diesem Objekt (12 bis 30, 38, 44) den Objekttyp der ersten beiden Objekte (12 bis 30, 38, 44) zuordnet, mit deren Hilfe der Fahrbahnverlauf (10, 32, 34) ermittelt worden ist.

## Claims

1. A method for determining the course of the road in the area in front of a vehicle;
in which, based on provided image data of at least one image of a representation of the area in front of the vehicle (46), at least two objects (12 to 30, 38, 44) are determined in the image, **characterized in that**
it is checked whether the determined objects (12 to 30, 38, 44) can be assigned to the same object type;
it is checked whether for the one object type of the two objects (12 to 30, 38, 44) it is preset as an object characteristic that objects (12 to 30, 38, 44) of this object type are arranged in a structure corresponding to the course (10, 32, 34) of the road; and, if yes, at least one course (10, 32, 34) of the road is determined dependent on the positions of the determined objects (12 to 30, 38, 44) in the image,
at least one further third object (12 to 30, 38, 44) is determined that can be assigned to the structure following the determined course (10, 32, 34) of the road, and
to this object (12 to 30, 38, 44) the object type of the first two objects (12 to 30, 38, 44) by means of which the course (10, 32, 34) of the road has been determined is assigned.

2. The method according to claim 1, **characterized in that** the objects (12 to 30, 38, 44) have a regular distance to each other in accordance with the object type, and that the regular distance of the objects (12 to 30, 38, 44) to each other is taken into account when determining the course (10, 32, 34) of the road.

3. The method according to one of the preceding claims, **characterized in that** the determined course (10, 32, 34) of the road is verified by means of road course models or by means of at least one restriction predetermined by a road construction regulation.

4. The method according to one of the preceding claims, **characterized in that** a new course (10, 32, 34) of the road is determined by means of the determined positions of the objects (12 to 30, 38, 44) in the image.

5. The method according to one of the preceding claims, **characterized in that** the object type of the objects (12 to 30, 38, 44) is determined by means of a classification method and that this object type is verified or falsified by means of the determined possible course (10, 32, 34) of the road.

6. The method according to one of the preceding claims, **characterized in that** for the objects (12 to 30, 38, 44) several possible object types are determined, that the object types with regularly arranged objects (12 to 30, 38, 44) along the course (10, 32, 34) of the road are selected and that for the object types with regularly arranged objects (12 to 30, 38, 44) each time a course of the road is determined as a hypothesis, which is each time pursued and verified or falsified by the processing of image data of further images of an image sequence.

7. The method according to one of the preceding claims, **characterized in that** the image is determined by means of at least one camera (48) arranged in or on the vehicle (46).

8. The method according to claim 7, **characterized in that** as a camera (48) a stereo camera system is used, wherein the stereo camera system determines the distance between the determined object and the vehicle (46).

9. The method according to claim 7 or 8, **characterized in that** by means of the camera (48) several images with representations of the at least two objects (12 to 30, 38, 44) are successively captured as an image sequence.

10. The method according to one of the preceding claims 5 to 9, **characterized in that** an object tracking over several captured images is performed.

11. The method according to claim 10, **characterized in that** the course (10, 32, 34) of the road is determined based on a vehicle coordinate system, wherein the X axis of the vehicle coordinate system runs parallel to the longitudinal axis of the vehicle (46) and the course (10, 32, 32) of the road is determined as a function in Y and Z direction, preferably as a third order polynomial.

12. The method according to one of the preceding claims, **characterized in that** the variance of the positions of the determined objects (12 to 30, 38, 44) is taken into account when determining the course (10, 32, 34) of the road.

13. The method according to one of the preceding claims, **characterized in that** the determined course (10, 32, 34) of the road is further processed by a lane departure warning system or a light assistance system.

14. An arrangement for determining the course of the road in the area in front of a vehicle
with an image capturing unit which provides image data of at least one representation of the area in front of the vehicle; and
with a processing unit which processes the provided image data,
wherein the processing unit detects at least two objects (12 to 30, 38, 44) in at least one image, **characterized in that**
the processing unit checks whether the determined objects (12 to 30, 38, 44) can be assigned to the same object type, and that the processing unit checks whether for the one object type of the two objects (12 to 30, 38, 44) it is preset as an object characteristic that objects (12 to 30, 38, 44) of this object type are arranged in a structure corresponding to the course (10, 32, 34) of the road, and, if yes, the processing unit determines at least one course (10, 32, 34) of the road dependent on the positions of the determined objects (12 to 30, 38, 44) in the image, and
that the processing unit determines at least one further third object (12 to 30, 38, 44) which can be assigned to the structure following the determined course (10, 32, 34) of the road, and
that the processing unit assigns to this object (12 to 30, 38, 44) the object type of the first two objects (12 to 30, 38, 44) by means of which the course (10, 32, 34) of the road has been determined.

## Revendications

1. Procédé de détermination du tracé d'une voie de circulation dans la zone située devant un véhicule ;
selon lequel au moins deux objets (12 à 30, 38, 44) sont déterminés dans l'image à partir des données d'image fournies d'au moins une image d'une représentation de la zone située devant le véhicule (46),
**caractérisé en ce qu'**on vérifie si les objets (12 à 30, 38, 44) déterminés peuvent être associés au même type d'objet ;
on vérifie si pour l'un des types d'objet parmi les deux objets (12 à 30, 38, 44) il est prédéfini comme propriété de l'objet que les objets (12 à 30, 38, 44) de ce type d'objet sont disposés dans une structure correspondant au tracé (10, 32, 34) de la voie de circulation ; et, dans l'affirmative, au moins un tracé (10, 32, 34) de la voie de circulation est déterminé en fonction des positions des objets (12 à 30, 38, 44) déterminés dans l'image,
au moins un troisième objet (12 à 30, 38, 44) supplémentaire est déterminé, qui peut être associé à la structure suivant le tracé (10, 32, 34) déterminé de la voie de circulation, et
le type d'objet des premiers objets (12 à 30, 38, 44), à l'aide desquels le tracé (10, 32, 34) de la voie de circulation a été déterminé, est associé à cet objet (12 à 30, 38, 44).

2. Procédé selon la revendication 1, **caractérisé en ce que** les objets (12 à 30, 38, 44) sont espacés les uns des autres par intervalles réguliers en fonction du type d'objet, et **en ce que** l'intervalle régulier entre les objets (12 à 30, 38, 44) est pris en compte pour la détermination du tracé (10, 32, 34) de la voie de circulation.

3. Procédé selon l'une quelconque des revendications précédentes, **caractérisé en ce que** le tracé (10, 32, 34) déterminé de la voie de circulation est vérifié à l'aide de modèles de tracé de voie de circulation ou à l'aide d'au moins une délimitation prédéfinie par une règlementation concernant la construction de routes.

4. Procédé selon l'une quelconque des revendications précédentes, **caractérisé en ce qu'**un nouveau tracé (10, 32, 34) de la voie de circulation est déterminé à l'aide des positions déterminées des objets (12 à 30, 38, 44) dans l'image.

5. Procédé selon l'une quelconque des revendications précédentes, **caractérisé en ce que** le type d'objet des objets (12 à 30, 38, 44) est déterminé à l'aide d'un procédé de classification et **en ce que** ce type d'objet est confirmé ou infirmé à l'aide du tracé (10, 32, 34) possible déterminé de la voie de circulation.

6. Procédé selon l'une quelconque des revendications précédentes, **caractérisé en ce que** plusieurs types possibles d'objet sont déterminés pour les objets (12 à 30, 38, 44), **en ce que** les types d'objet sont sélectionnés avec des objets (12 à 30, 38, 44) disposés régulièrement le long du tracé (10, 32, 34) de la voie de circulation et **en ce que** pour les types d'objet avec les objets (12 à 30, 38, 44) disposés régulièrement, respectivement un tracé de la voie de circulation est déterminé comme hypothèse, qui est suivie par le traitement des données d'image d'autres images d'une succession d'images et confirmée ou infirmée.

7. Procédé selon l'une quelconque des revendications précédentes, **caractérisé en ce que** l'image est déterminée à l'aide d'au moins une caméra (48) disposée dans ou sur le véhicule (46).

8. Procédé selon la revendication 7, **caractérisé en ce qu'**on utilise un système de caméra stéréoscopique comme caméra (48), le système de caméra stéréoscopique déterminant l'éloignement entre l'objet déterminé et le véhicule (46).

9. Procédé selon la revendication 7 ou 8, **caractérisé en ce que** plusieurs images portant les représentations des deux objets (12 à 30, 38, 44) ou plus sont détectées les unes à la suite des autres en tant que succession d'image à l'aide de la caméra (48).

10. Procédé selon l'une quelconque des revendications 5 à 9, **caractérisé en ce qu'**un suivi de l'objet est mis en oeuvre au moyen de plusieurs images détectées.

11. Procédé selon la revendication 10, **caractérisé en ce que** le tracé (10, 32, 34) de la voie de circulation est déterminé à partir d'un système de coordonnées de véhicule, l'axe X du système de coordonnées de véhicule s'étendant parallèlement à l'axe longitudinal du véhicule (46) et le tracé (10, 32, 34) de la voie de circulation étant déterminé en tant que fonction dans la direction Y et X, de préférence en tant que polynôme de troisième ordre.

12. Procédé selon l'une quelconque des revendications précédentes, **caractérisé en ce que** la variance des positions des objets (12 à 30, 38, 44) déterminés est prise en compte pour la détermination du tracé (10, 32, 34) de la voie de circulation.

13. Procédé selon l'une quelconque des revendications précédentes, **caractérisé en ce que** le tracé (10, 32, 34) déterminé de la voie de circulation est retraité par un système d'assistance au maintien de la voie de circulation ou un système d'assistance à l'éclairage.

14. Ensemble de détermination du tracé d'une voie de circulation dans la zone située devant un véhicule
comprenant une unité de détection d'images qui fournit des données d'image d'au moins une représentation de la zone située devant le véhicule ; et
comprenant une unité de traitement qui traite les données d'image fournies,
l'unité de traitement d'image détectant au moins deux objets (12 à 30, 38, 44) dans au moins une image, **caractérisée en ce que**
l'unité de traitement vérifie si les objets (12 à 30, 38, 44) déterminés peuvent être associés au même type d'objet et **en ce que** l'unité de traitement vérifie si pour un des types d'objet parmi les deux objets (12 à 30, 38, 44), il est prédéfini comme propriété de l'objet que les objets (12 à 30, 38, 44) de ce type d'objet sont disposés dans une structure correspondant au tracé (10, 32, 34) de la voie de circulation, et, dans l'affirmative, l'unité de traitement détermine au moins un tracé (10, 32, 34) de la voie de circulation en fonction des positions des objets (12 à 30, 38, 44) déterminés dans l'image, et
**en ce que** l'unité de traitement détermine au moins un troisième objet (12 à 30, 38, 44) supplémentaire qui peut être associé à la structure suivant le tracé (10, 32, 34) de la voie de circulation, et
**en ce que** l'unité de traitement associe à cet objet (12 à 30, 38, 44) le type d'objet des deux premiers objets (12 à 30, 38, 44) à l'aide desquels le tracé (10, 32, 34) de la voie de circulation a été déterminé.
